(19) **Europäisches Patentamt European Patent Office Office européen des brevets**

(11) **EP 3 371 929 B1**

(12) **FASCICULE DE BREVET EUROPEEN**

(45) Date de publication et mention de la délivrance du brevet:
**18.03.2020 Bulletin 2020/12**

(21) Numéro de dépôt: **16788489.9**

(22) Date de dépôt: **26.10.2016**

(51) Int Cl.:
***H04L 9/30*** (2006.01)

(86) Numéro de dépôt international:
**PCT/EP2016/075717**

(87) Numéro de publication internationale:
**WO 2017/076705 (11.05.2017 Gazette 2017/19)**

(54) **MÉTHODE DE CHIFFREMENT BASÉE SUR LES ATTRIBUTS COMPRENANT UNE PHASE DE PRÉ-CALCUL**

VERFAHREN ZUR VERSCHLÜSSELUNG BASIEREND AUF ATTRIBUTEN MIT EINER VORBERECHNUNGSPHASE

METHOD OF ENCRYPTION BASED ON THE ATTRIBUTES COMPRISING A PRE-CALCULATION PHASE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2015 FR 1560508**

(43) Date de publication de la demande:
**12.09.2018 Bulletin 2018/37**

(73) Titulaire: **Commissariat à l'Énergie Atomique et aux Énergies Alternatives 75015 Paris (FR)**

(72) Inventeurs:
• **OUALHA, Nouha 91940 Les Ulis (FR)**
• **JANNETEAU, Christophe 28210 Chaudon (FR)**

(74) Mandataire: **Hammes, Pierre et al Marks & Clerk France Immeuble Visium 22, avenue Aristide Briand 94117 Arcueil Cedex (FR)**

(56) Documents cités:
• **Shucheng Yu: "Data Sharing on Untrusted Storage with Attribute-Based Encryption", A Dissertation Submitted to the Faculty of the WORCESTER POLYTECHNIC INSTITUTE, 1 juillet 2010 (2010-07-01), XP055145871, Extrait de l'Internet: URL:http://www.wpi.edu/Pubs/ETD/Available/etd-071310-143310/unrestricted/Yu.pdf [extrait le 2014-10-10]**
• **HE HENG ET AL: "Secure, Efficient and Fine-Grained Data Access Control Mechanism for P2P Storage Cloud", IEEE TRANSACTIONS ON CLOUD COMPUTING, IEEE COMPUTER SOCIETY, USA, vol. 2, no. 4, 1 octobre 2014 (2014-10-01), pages 471-484, XP011571454, DOI: 10.1109/TCC.2014.2378788**
• **CRAMPTON JASON ET AL: "Attribute-Based Encryption for Access Control Using Elementary Operations", 2014 IEEE 27TH COMPUTER SECURITY FOUNDATIONS SYMPOSIUM, IEEE, 19 juillet 2014 (2014-07-19), pages 125-139, XP032686203, DOI: 10.1109/CSF.2014.17**
• **RAFAIL OSTROVSKY ET AL: "Attribute-Based Encryption with Non-Monotonic Access Structures", INTERNATIONAL ASSOCIATION FOR CRYPTOLOGIC RESEARCH,, vol. 20070820:071636, 16 août 2007 (2007-08-16), pages 1-17, XP061002421,**

**Description**

L'invention se situe dans le domaine de la protection des données, et en particulier le domaine de la sécurité dans les réseaux informatiques ou les réseaux de télécommunications à faibles ressources. Les réseaux à faibles ressources sont constitués de dispositifs possédant de faibles capacités de calcul, de mémoire et d'énergie. Des exemples de réseaux à faibles ressources sont les réseaux émergents avec des communications machine-à-machine, l'Internet des objets, les réseaux de capteurs sans-fil, et les réseaux véhiculaires. L'invention peut aussi s'appliquer à d'autres dispositifs contraints en ressources comme par exemples les cartes à puce.

L'invention porte plus précisément sur la problématique de la sécurisation de l'échange de données au sein d'un réseau et concerne une méthode de chiffrement basée sur les attributs comprenant une phase de pré-calcul permettant d'accélérer l'exécution de l'algorithme de chiffrement qui est, le plus souvent, fortement consommateur de ressources de calcul.

Un des points clés pour garantir la sécurité des applications informatiques est la protection des données sensibles. Les données peuvent être protégées au moyen d'algorithmes cryptographiques de chiffrement de données, nécessitant des clés cryptographiques pour déchiffrer les données. Les clés doivent être distribuées aux utilisateurs autorisés à déchiffrer les données. Pour gérer d'une manière sélective différents types d'utilisateurs qui réalisent différentes tâches sur les données, un contrôle d'accès aux données fin et flexible est nécessaire. Une approche récente et prometteuse, dénommée chiffrement basé sur les attributs ou ABE ("attribute-based encryption", en anglais), permet de fournir à la fois la confidentialité des données et le contrôle d'accès aux données, en combinant de manière cryptographique les clés de déchiffrement aux permissions d'accès aux données. Les données ainsi chiffrées ne nécessitent pas d'être transmises sur un canal sûr ou d'être stockées dans un serveur de confiance. Pour déchiffrer les données chiffrées, les utilisateurs doivent désormais satisfaire une politique d'accès qui est définie sur des attributs qui peuvent être associés aux utilisateurs des données, aux éléments de données, et à l'environnement. A titre d'exemple, un attribut peut concerner le rôle d'un utilisateur, par exemple sa profession, ou des caractéristiques personnelles de l'utilisateur, par exemple sa fonction ou un niveau de priorité qui lui est assigné pour l'accès aux données sensibles.

La publication de Bethencourt et autres [1] décrit une méthode de chiffrement basée sur les attributs particulière, appelée méthode de chiffrement CP-ABE « Ciphertext-Policy Attribute-Based Encryption ».

Cette méthode est une construction d'une méthode de chiffrement basée sur les attributs ayant la politique d'accès incorporée dans les données chiffrées et les attributs détenus par les utilisateurs de données. De cette façon, si la politique d'accès change régulièrement, le contrôle d'accès est plus flexible que le schéma de base ABE, puisqu'il est nécessaire seulement de changer la politique d'accès qui sera incorporée dans les données chiffrées, plutôt que de distribuer de nouvelles clés aux utilisateurs.

L'approche du chiffrement basé sur les attributs a pris de la maturité et peut être utilisée comme un module fonctionnel pour construire un système d'applications. Outre le schéma de Bethencourt et autres, plusieurs constructions cryptographiques basées sur ABE ont été proposées récemment. Bien que ces constructions permettent de coupler, d'une manière sécurisée, la confidentialité et le contrôle d'accès aux données, elles ne sont pas conçues pour être économes en énergie. Elles utilisent des opérations de groupe et mappage bilinéaire coûteuses ainsi que des opérations de multiplication sur des nombres très grands, notamment durant le chiffrement des données dont la complexité du calcul augmente avec le nombre d'attributs considérés dans la politique d'accès. Le coût de calcul est un des principaux obstacles à l'adoption de cette technique de chiffrement dans certaines applications utilisant des dispositifs fortement limités en termes de ressources de calcul et d'énergie.

Il existe ainsi un problème technique visant à trouver des solutions permettant l'exécution d'algorithmes de chiffrement basés sur les attributs, notamment des algorithmes du type CP-ABE ou dérivés de cet algorithme, sur des dispositifs à ressources limitées.

Pour pallier à ce problème, quelques travaux ont été entrepris pour adapter l'algorithme de chiffrement de données basé sur ABE à des dispositifs contraints en ressources, notamment dans des ouvrages de recherche. Une solution présentée dans [2] propose de déléguer les opérations coûteuses de l'algorithme de chiffrement à un ensemble de serveurs de confiance disponibles pour faire les calculs nécessaires pour le compte d'un dispositif contraint en ressources. La solution proposée nécessite la présence et la disponibilité d'un nombre significatif de serveurs de confiance pour faire les calculs, des échanges en ligne, interactifs, et synchrones avec ses serveurs, ainsi que des données supplémentaires permettant le partage de calcul et la gestion des serveurs, ce qui limite le gain en termes de performance.

De manière générale, les solutions qui ont été proposées pour réduire le coût de calculs cryptographiques onéreux reposent, pour la plupart, sur la collaboration entre plusieurs parties pour partager la charge et le coût des calculs. Des approches nécessitant la disponibilité d'un nombre suffisant de serveurs de calcul pour limiter les risques d'une collusion entre des serveurs « curieux » (serveurs non sécurisés), ont été appliquées à plusieurs protocoles de sécurité et systèmes cryptographiques, comme par exemples, le protocole d'établissement de clés D-HIP décrit dans la demande de brevet européen publiée sous le numéro EP2832034A1, et l'algorithme de chiffrement basé sur les attributs décrit dans [2]. Par ailleurs, la demande de brevet française déposée sous le N°1556679 décrit une méthode dans laquelle un seul serveur est sollicité pour réaliser le calcul délégué d'une manière sécurisée. L'approche implique, toutefois, un échange interactif avec le serveur en question.

Ateniese et autres, dans [3], ont opté pour une approche différente. Sans recours à des parties tierces, le dispositif contraint en ressources de calcul stocke en mémoire des paires de valeurs pré-calculées qui sont utilisées par la suite dans le système cryptographique. En contrepartie d'un peu plus d'espace de mémoire (environ 10 KB de plus), Ateniese et autres ont montré que la performance de l'algorithme de signature numérique basé sur les courbes elliptiques ECDSA (*Elliptic Curve Digital Signature Algorithm,* en anglais) augmente approximativement de 50% en comparaison avec la signature de base qui n'utilise pas le pré-calcul. Les travaux d'Ateniese et autres se sont basés sur des techniques de pré-calcul décrits par Boyko et autres dans [4]. Ces techniques permettent de réduire le nombre de computations à réaliser pour calculer une paire aléatoire de valeurs sous la forme $(x, g^x \bmod p)$ ou $(x, x^e \bmod N)$ générée à partir de paires de valeurs pré-calculées, en utilisant des trajets aléatoires sur des graphes de Cayley avec un taux d'expansion $\varepsilon > 0$ dans des groupes abéliens. Ces techniques ont été étendues pour fonctionner sur les courbes elliptiques dans [5].

La solution proposée par Ateniese et autres ne peut cependant pas être utilisée pour un algorithme de chiffrement basé sur les attributs du type CP-ABE car ce dernier n'utilise pas uniquement des valeurs aléatoires mais principalement des polynômes définis par un point fixe et d'autres points choisis aléatoirement.

Bianchi et autres dans [6] propose de mettre en cache des clés qui seront utilisées lors d'un chiffrement basé sur les attributs, pour des politiques d'accès aux données connues au préalable. Leur approche exploite les technologies de capture d'énergie solaire pour réaliser des opérations de calcul coûteuses. En utilisant des résultats de simulation et d'implémentation réelle sur des capteurs, Bianchi et autres démontre que la mise en cache des calculs de l'algorithme de chiffrement, permet de réaliser des gains significatifs en termes de performance (c. à. d. moins d'énergie consommée et de temps d'exécution). Toutefois, le contrôle d'accès aux données est moins flexible que l'algorithme de chiffrement basé sur les attributs original, puisque leur approche requiert que la politique d'accès soit prédéfinie à l'avance pour réaliser les pré-calculs.

Aucun des enseignements précités ne propose de solution permettant d'accélérer l'exécution d'une méthode de chiffrement basée sur les attributs du type CP-ABE.

L'invention répond à ce problème en proposant une solution basée sur une phase de pré-calcul qui ne nécessite pas d'échanges avec des serveurs de confiance et qui permet de réduire considérablement le coût de calcul d'un chiffrement de données basé sur CP-ABE.

L'invention utilise une phase préalable de préparation dans laquelle des valeurs sont pré-calculées pour accélérer l'exécution d'un algorithme de chiffrement basé sur les attributs. La phase de préparation peut être réalisée hors ligne soit par une partie tierce de confiance et installée par la suite dans le dispositif contraint en ressources lors de sa mise en service, ou en ligne par le dispositif lui-même (p. ex. lors d'un surplus de ressources d'énergie). La deuxième phase de l'invention permet de générer les termes des données chiffrées en utilisant seulement des multiplications modulaires et des additions dans un groupe de points d'une courbe elliptique, dont le nombre est fonction d'un paramètre *k.* L'invention peut être utilisée lors du chiffrement de données basé sur les attributs par un algorithme du type CP-ABE. Les opérations de calcul nécessitant des exponentiations modulaires et des multiplications scalaires dans un groupe de points, sont remplacées par des opérations de calcul de multiplications modulaires et d'additions dans un groupe de points, ce qui diminue considérablement le coût et la complexité de l'algorithme de chiffrement de données, ainsi que le temps d'exécution de l'algorithme comparé à une implémentation traditionnelle.

On connait également les méthodes de chiffrement décrites dans les documents suivants :

- "Data Sharing on untrusted storage with attribute-based encryption", S.Yu et al, A dissertation submitted to the faculty of the Worcester polytechnic institute, 1er juillet 2010,
- "Secure, efficient and fine-grained data access control mechanism for P2P storage cloud", He Heng et al, IEEE transactions on cloud computing, IEEE computer society, USA, 1er octobre 2014,
- "Attribute-based encryption for access control using elementary operations", Crampton Jason et al, 2014 IEEE 27th computer security foundations symposium, IEEE, 19 juillet 2014,
- "Attribute-based encryption with non-monotonic access structures", Rafail Ostrovsky et al, International Association for cryptologic research, 16 aout 2007.

L'invention a ainsi pour objet une méthode, selon la revendication indépendante 1, implémentée par ordinateur, de chiffrement basée sur les attributs comprenant l'exécution d'un algorithme de chiffrement du type CP-ABE ou dérivé de CP-ABE, associé à une politique d'accès décrite par une structure d'accès organisée sous la forme d'un arbre, le chiffrement d'un message M par ledit algorithme nécessitant, pour chaque nœud non-feuille a de l'arbre, la génération aléatoire d'un polynôme principal $q_a(x)$ et au moins un calcul de produit entre le polynôme principal $q_a(x)$ pris en au moins un point $q_a(i)$ et au moins un élément d'un groupe cyclique, ladite méthode comprenant :

- dans une étape préalable, le pré-calcul du produit entre une pluralité d'entiers $r_i$ générés aléatoirement et au moins un élément d'un groupe cyclique et la sauvegarde des résultats de pré-calcul dans une mémoire,
- pour chiffrer le message M, l'accès aux résultats de pré-calcul sauvegardés dans la mémoire et leur utilisation pour effectuer au moins un calcul de produit entre le polynôme principal pris en au moins un point $q_a(i)$ et au moins un élément d'un groupe cyclique.

Selon un aspect particulier, la méthode selon l'invention comprend dans l'étape préalable, la génération aléatoire d'un premier nombre n d'entiers $r_i$ et le pré-calcul des produits entre chaque nombre entier $r_i$ et au moins un élément d'un groupe cyclique et, pour chiffrer le message M, l'utilisation d'un second nombre k, inférieur à n, de résultats de pré-calcul, choisis aléatoirement, pour effectuer au moins un calcul de produit entre le polynôme principal $q_a(x)$ pris en au moins un point $q_a(i)$ et au moins un élément d'un groupe cyclique.

Selon un aspect particulier, la méthode selon l'invention comprend pour chiffrer le message M, pour le nœud racine de l'arbre, le calcul de la somme de résultats de pré-calcul pour déterminer le produit entre une valeur entière s aléatoire et ledit au moins un élément d'un groupe cyclique.

Selon un aspect particulier, la méthode selon l'invention comprend pour chiffrer le message M, pour chaque nœud non feuille, pour chaque coefficient d'un polynôme secondaire r(x) relié au polynôme principal par une relation de dépendance du type $q_a(x) = r(x).x + q_a(0)$, le calcul de la somme de résultats de pré-calcul pour déterminer un résultat intermédiaire égal au produit entre ledit coefficient et ledit au moins un élément d'un groupe cyclique.

Selon un aspect particulier, la méthode selon l'invention comprend pour chiffrer le message M, pour chaque nœud non feuille, pour chaque nœud enfant dudit nœud non feuille indexé par un indice i, une évaluation intermédiaire du produit entre d'une part le produit r(i).i et d'autre part ledit au moins un élément d'un groupe cyclique à partir d'une somme pondérée desdits résultats intermédiaires calculée sur l'ensemble des coefficients du polynôme secondaire r(x).

Selon un aspect particulier, la méthode selon l'invention comprend pour chiffrer le message M, pour chaque nœud non feuille, pour chaque nœud enfant dudit nœud non feuille, l'évaluation du produit entre le polynôme principal $q_a(x)$ pris en au moins un point $q_a(i)$ variant sur les indices des nœuds enfants du nœud non feuille et ledit au moins un élément d'un groupe cyclique à partir de l'évaluation intermédiaire et de l'évaluation antérieure du produit entre le polynôme principal $q_{parent}(x)$ associé au nœud parent dudit nœud non feuille pris au point correspondant à l'indice dudit nœud non feuille au sein des enfants dudit nœud parent, et ledit au moins un élément d'un groupe cyclique.

Selon un aspect particulier de l'invention, l'évaluation du produit entre le polynôme principal $q_a(x)$ pris en au moins un point $q_a(i)$ variant sur les indices des nœuds enfants du nœud non feuille et ledit au moins un élément d'un groupe cyclique est effectuée de façon récursive en parcourant l'arbre de son nœud racine vers ses nœuds feuilles.

Selon un aspect particulier, la méthode selon l'invention comprend dans l'étape préalable, la génération d'un troisième nombre n' d'entiers $r'_i$ et le pré-calcul de n' produits et, pour chiffrer le message M, l'utilisation, en outre, d'un résultat de pré-calcul supplémentaire parmi les n' produits.

Selon un aspect particulier de l'invention, les entiers générés aléatoirement correspondent aux valeurs $q_a(i)$ dudit polynôme principal pris en une pluralité de points i et le pré-calcul réalisé dans l'étape préalable inclut le produit entre d'une part le produit $q_a(i).i$ et d'autre part au moins un élément d'un groupe cyclique.

Selon un aspect particulier, la méthode selon l'invention comprend pour chiffrer le message M, pour chaque nœud non feuille, pour chaque nœud enfant dudit nœud non feuille, l'évaluation du produit entre le polynôme principal $q_a(x)$ pris en au moins un point $q_a(i)$ variant sur les indices des nœuds enfants du nœud non feuille et ledit au moins un élément d'un groupe cyclique à partir de la somme d'au moins une partie des résultats de pré-calcul.

Selon un aspect particulier de l'invention, ledit au moins un élément d'un groupe cyclique est choisi parmi un point d'une courbe elliptique, le produit d'un point d'une courbe elliptique avec un entier, le résultat de l'application d'une fonction de hachage à une valeur représentant un attribut associé à un nœud feuille de l'arbre.

L'invention a également pour objet un dispositif de chiffrement selon la revendication indépendante 12, comprenant des moyens, incluant un processeur, configurés pour exécuter la méthode de chiffrement selon l'invention et au moins une mémoire dans laquelle sont stockés les résultats de pré-calcul de l'étape préalable de ladite méthode.

L'invention a également pour objet un produit programme d'ordinateur selon la revendication indépendante 13, téléchargeable depuis un réseau de communication et/ou stocké sur un support lisible par ordinateur comportant des instructions de code de programme pour l'exécution de la méthode de chiffrement selon l'invention, lorsque le programme est exécuté par un processeur.

L'invention a également pour objet un support d'enregistrement selon la revendication indépendante 14, lisible par un processeur sur lequel est enregistré un programme comportant des instructions de code de programme pour l'exécution de la méthode de chiffrement selon l'invention, lorsque le programme est exécuté par un processeur.

D'autres caractéristiques et avantages de la présente invention apparaîtront mieux à la lecture de la description qui suit en relation aux dessins annexés qui représentent :

- La figure 1, un organigramme illustrant la mise en œuvre d'un algorithme de chiffrement CP-ABE selon l'art antérieur,

- La figure 2, un organigramme illustrant la mise en œuvre d'un algorithme de chiffrement du type CP-ABE modifié selon l'invention,
- La figure 3, un organigramme détaillant une phase préalable de préparation de la méthode selon l'invention,
- La figure 4, un organigramme détaillant un premier sous-programme utilisé par l'invention,
- La figure 5, un organigramme détaillant un second sous-programme utilisé par l'invention,
- La figure 6, un schéma d'un dispositif de chiffrement selon l'invention.

On décrit à présent l'invention dans un exemple de réalisation appliqué à l'algorithme CP-ABE connu de l'Homme du métier et décrit dans la référence [1]. Sans sortir du cadre de l'invention, celle-ci s'applique également aux algorithmes dérivés ou étendus à partir de l'algorithme de base CP-ABE. Sans être exhaustif, l'invention peut notamment également s'appliquer aux algorithmes décrits dans les références [7],[8],[9] et [10] qui portent sur des extensions de l'algorithme de base CP-ABE.

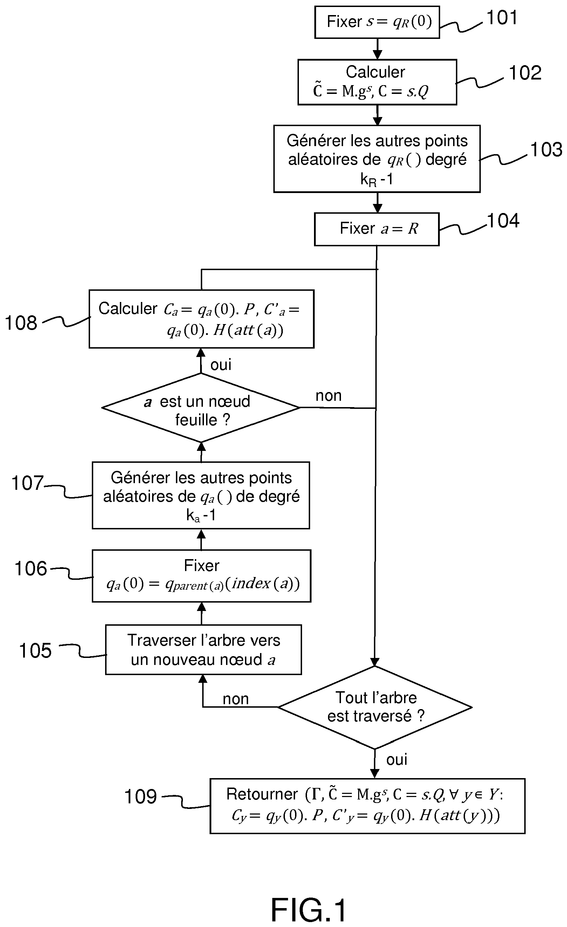

La figure 1 illustre une implémentation possible de l'algorithme connu CP-ABE. La structure d'accès de l'algorithme CP-ABE est construite pour chaque donnée ou message chiffré, et l'ensemble des attributs descriptifs sont associés aux utilisateurs et à leurs clés privées. Si l'utilisateur possède les attributs qui satisfont la structure d'accès d'une donnée chiffrée, il peut la déchiffrer.

L'algorithme considère trois acteurs : l'expéditeur, le récepteur, et l'autorité. Le rôle de ce dernier est de générer les paramètres et clés publiques, ainsi que les clés privées des récepteurs. L'algorithme comprend cinq algorithmes. L'invention s'applique à l'algorithme de chiffrement de données, qui est décrit dans le paragraphe suivant dans sa version conforme à l'état de l'art [1].

L'algorithme CP-ABE comporte au préalable une phase de configuration dans laquelle l'autorité génère plusieurs paramètres de l'algorithme. En particulier, l'autorité fixe un point P d'une courbe elliptique qui permet de générer un groupe additif cyclique $G_1$ d'ordre p, elle définit également un groupe multiplicatif cyclique $G_2$ de même ordre p, une fonction de mappage bilinéaire e $e : G_1 \times G_1 \to G_2$, et une fonction de hachage $H : \{0, 1\}^* \to G_1$ qui permet de faire correspondre un attribut à un élément du groupe $G_1$. L'autorité choisit deux valeurs aléatoires $\alpha$ et $\beta$ dans l'ensemble $\mathbb{Z}_p$ des entiers modulo p et crée la clé publique
$$PK = \left( Q = \beta.P, \ T = \left(\frac{1}{\beta}\right).P, \right.$$
$g=eP, P\alpha$ qui est rendue publique, et la clé secrète $MK = \beta, \alpha.P$ qui est gardée secrète.

L'algorithme comporte ensuite une phase de chiffrement, pour chaque message M à chiffrer, cette phase étant décrite en détail à la figure 1.

Pour chiffrer un message $M$ avec une structure d'accès $\Gamma$, la structure d'accès $\Gamma$ est représentée sous forme d'un arbre dont les nœuds internes correspondent à des portes de seuil ou « threshold gate » en anglais et les nœuds feuille de l'arbre sont associés à des attributs. Une porte de seuil a pour paramètres $(k_a,n_a)$ et exécute une fonction conditionnelle de la forme « $k_a$ conditions réalisées sur $n_a$ conditions au total ». Un nœud interne non feuille associé à une porte seuil de paramètres $(k_a, n_a)$ est ainsi relié à $n_a$ nœuds enfants. Les attributs sont relatifs au rôle de l'utilisateur (le destinataire de la donnée chiffrée), à des caractéristiques de l'utilisateur, au contenu de la donnée chiffrée, à l'environnement. De par la structure en arbre, la politique d'accès de l'algorithme de chiffrement définit des conditions à respecter sur les attributs associés aux nœuds feuilles de l'arbre. Les conditions sont définies par les nœuds non feuilles sous la forme de portes de seuil. Deux fonctions sont notamment définies dans l'arbre : la fonction *parent(a)* qui désigne le nœud parent du nœud *a,* et la fonction *index(a)* qui désigne l'indice associé au nœud *a* par rapport aux autres nœuds du même nœud parent.

Chaque nœud a dans l'arbre (même les nœuds feuille) est associé à un polynôme $q_a(.)$, d'ordre $(k_a - 1)$, tel que qa(0) = $q_{parent(a)}$(index(a)), $k_a$ étant un paramètre de la porte de seuil du nœud a. Les autres points du polynôme sont choisis aléatoirement. Pour le nœud racine R, le polynôme $q_R()$ est défini tel que $q_R(0) = s$, où s est une valeur aléatoire de $\mathbb{Z}_p$ choisie par le chiffreur/expéditeur, et les autres points du polynôme sont choisis aléatoirement. Le calcul des polynômes est réalisé selon une approche descendante dans l'arbre (du nœud racine vers les nœuds feuilles).

La figure 1 détaille le parcours de l'arbre en partant du nœud racine R. Dans une première étape 101, on fixe $q_R(0) = s$, puis on calcule 102 les premiers termes du message chiffré $\tilde{C} = M.g^s$, $C = s.Q$. On génère ensuite 103 les autres points aléatoires du polynôme $q_R()$ de degré $k_R$-1.

L'arbre est parcouru ensuite dans le sens descendant en commençant 104 par fixer le nœud courant a égal au nœud racine R. Si l'arbre n'est pas entièrement traversé, on fixe 105 le nœud courant a à un nouveau nœud puis on détermine 106 $q_a(0) = q_{parent}(a)(index(a))$ à partir du polynôme $q_{parent}()$ généré à la récursivité précédente. On génère 107 les autres points aléatoires du polynôme $q_a()$ de degré $k_a$-1. Si a est un nœud feuille de l'arbre alors on calcule 108 les éléments suivants du message chiffré $C_a = q_a(0).P$, $C'_a = q_a(0).H(att(a))$, sinon on poursuit le parcours de l'arbre de façon récursive vers un nouveau nœud.

A la fin du traitement de l'arbre, l'expéditeur génère 109 la donnée chiffrée comme étant : $CT = (\Gamma, \tilde{C} = M.g^s$, $C = s. Q, \forall\ y \in Y : C_y = qy0.P, C'y=qy0.Hatty,$ avec *att(a)* une fonction qui retourne la valeur de l'attribut qui est associé au nœud feuille *a* dans l'arbre d'accès *et Y* est l'ensemble des nœuds feuille de l'arbre.

L'algorithme de chiffrement du schéma CP-ABE permet de réaliser un contrôle d'accès des données flexible, mais son coût et sa complexité en termes de calcul, rend difficile sa mise en œuvre dans des dispositifs contraints en ressources. Les opérations de calcul les plus coûteuses concernent notamment le calcul des termes $C_y$ et $C'_y$ qui dépendent de la politique d'accès associée aux données, et dont le nombre augmente avec le nombre d'attributs dans l'arbre d'accès. En particulier les multiplications entre un élément d'un groupe cyclique tel que P, Q ou H(att(y)) avec la valeur en zéro d'un polynôme $q_y(0)$ est particulièrement couteuse car les valeurs en jeu peuvent être très élevées.

Typiquement les polynômes utilisés sont générés dans le groupe $\mathbb{Z}_p$ avec p un entier qui peut prendre une valeur dimensionnée, par exemple, sur 512 bits.

La solution apportée par l'invention permet de réduire le coût de calcul de ces termes en utilisant des valeurs pré-calculées et des opérations de calcul moins coûteuses, tout en conservant la même flexibilité de contrôle d'accès par rapport à l'algorithme de chiffrement original.

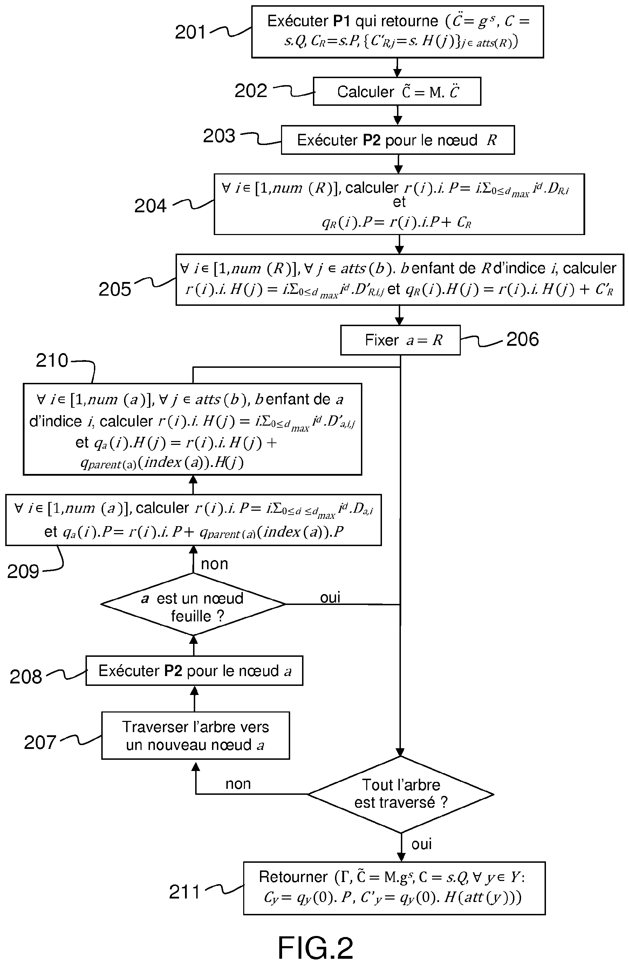

La figure 2 illustre, sur un organigramme, la mise en œuvre d'une méthode de chiffrement CP-ABE modifiée selon l'invention afin d'accélérer son exécution et de la rendre compatible d'un dispositif à ressources limitées.

Le principe du chiffrement CP-ABE décrit dans [1] consiste à définir une politique d'accès au message chiffré qui est décrite comme un ensemble d'expressions logiques sur un ou plusieurs attributs. La politique d'accès définit les attributs nécessaires pour déchiffrer un message. Le propriétaire de la donnée à chiffrer peut décider de la politique d'accès associée à la donnée chiffrée. La politique d'accès est modélisée sous la forme d'une structure arborescente (encore appelée arbre) qui comporte un nœud racine noté R, des nœuds non-feuille qui représentent des portes de seuil de la structure d'accès, et des nœuds feuille qui sont associés aux attributs. Ainsi, les expressions logiques sur plusieurs attributs peuvent être modélisées par une telle structure. Par exemple un nœud non feuille représentant une porte de seuil de paramètres (3,5) peut être relié à cinq nœuds feuilles représentant cinq attributs différents pour modéliser l'expression logique selon laquelle trois attributs parmi les cinq doivent être satisfaits. De façon plus générale, un nœud non feuille peut aussi être relié à des nœuds enfants qui sont eux-mêmes des nœuds non feuille. De cette façon, il est possible de modéliser des expressions logiques imbriquées sur plusieurs attributs.

Dans le but de simplifier l'interprétation de la structure d'accès, on considère les fonctions suivantes :

- parent(a) retourne le nœud parent du nœud a dans l'arbre d'accès,
- child(a) retourne l'ensemble des nœuds enfants du nœud a dans l'arbre,
- num(a) retourne le nombre de nœuds enfants du nœud a dans l'arbre,
- degree(a) retourne la valeur du seuil de la porte associée au nœud non-feuille a de l'arbre,
- att(a) retourne la valeur de l'attribut associé au nœud feuille a dans l'arbre,
- atts(a) retourne l'ensemble des attributs associés aux nœuds feuille du sous arbre dérivé de l'arbre d'accès, formé par le nœud racine a (si a est le nœud racine de l'arbre d'accès, alors atts(a) est l'ensemble de tous les attributs associés à la structure d'accès), et
- index(a) retourne l'indice associé au nœud a dans l'arbre qui correspond à l'ordre défini dans l'arbre entre les nœuds enfants d'un même nœud.

Par la suite on identifie les modifications apportées par l'invention par rapport à l'algorithme CP-ABE décrit dans [1] et explicité par la figure 1 auquel on fera référence en parlant d'algorithme CP-ABE de base.

La phase de configuration de l'algorithme CP-ABE (non représentée sur la figure 2) est conservée à l'identique par rapport à la version classique décrite à la figure 1. Cette phase de configuration est toujours exécutée par une entité tierce qui joue le rôle d'autorité et consiste à définir les paramètres et fonctions cryptographiques utilisées par la suite dans la phase de chiffrement d'un message M.

Durant cette phase, une courbe elliptique avec un point P qui génère le groupe additif cyclique $G_1$ d'ordre p sont fixés. Également, un groupe multiplicatif cyclique $G_2$ du même ordre p, et un mappage bilinéaire e : $G_1 \times G_1 \to G_2$ sont aussi définis. Une fonction de hachage H : $\{0, 1\}^* \to G_1$ permet de faire correspondre un attribut à un élément du groupe $G_1$. La phase de configuration est réalisée avec les mêmes paramètres et fonctions cryptographiques que l'algorithme de chiffrement basé sur les attributs CP-ABE de Bethencourt et autres. En particulier, les paramètres publics de l'algorithme $PK = \left(Q = \beta.P,\ T = \left(\frac{1}{\beta}\right).P,\ g = e(P,P)^{\alpha}\right)$ sont considérés, ainsi que l'espace des attributs $\Omega$.

La méthode de chiffrement modifiée selon l'invention comporte ensuite une première phase de préparation puis une phase de chiffrement.

La phase de préparation peut être exécutée par le dispositif de chiffrement lui-même ou par une entité tierce de confiance en une seule fois ou d'une manière opportuniste (p. ex. lors de la disponibilité de ressources d'énergie). Cette phase consiste à pré-calculer des valeurs qui sont sauvegardées par la suite dans des tables. Ces valeurs sont ensuite utilisées durant la deuxième phase de chiffrement qui est exécutée pour chaque nouveau message M à chiffrer. La phase de préparation vise à réaliser des calculs complexes qui sont exécutés au préalable une seule fois afin de permettre, dans la phase de chiffrement, un allègement des calculs à exécuter à chaque message à chiffrer.

La phase de préparation consiste en une étape préalable à la phase de chiffrement et est indépendante du message à chiffrer.

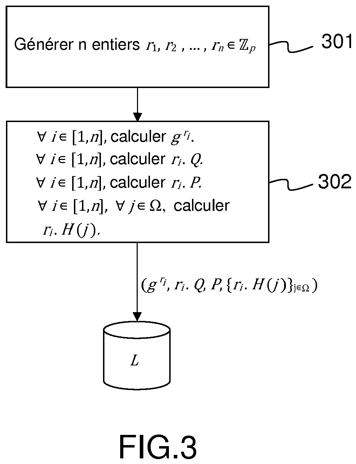

Cette phase de préparation est illustrée par l'organigramme de la figure 3 qui comprend une première étape 301 de génération aléatoire de $n$ entiers $r_1, r_2, \ldots, r_n \in \mathbb{Z}_p$. Ces entiers sont générés pour se substituer aux aléas utilisés dans l'algorithme CP-ABE, notamment les coefficients des polynômes de la structure d'accès. Le nombre n est un paramètre de l'invention et a une influence sur les performances, en termes de sécurité, de l'algorithme. Plus le nombre n est grand, plus le chiffrement est difficilement attaquable.

Dans une deuxième étape 302, les calculs suivants sont exécutés

$\forall i \in [1,n]$, calculer $g^{r_i}$.
$\forall i \in [1,n]$, calculer $r_i.Q$.
$\forall i \in [1,n]$, calculer $r_i.P$.
$\forall i \in [1,n]$, $\forall j \in \Omega$, calculer $r_i.H(j)$.

Le premier calcul est une exponentiation modulaire et les trois calculs suivants sont tous de la forme d'un produit entre un entier généré aléatoirement et un élément d'un groupe cyclique. Toutes ces opérations sont complexes à exécuter et requièrent des ressources importantes notamment du fait que les entiers $r_i$ sont pris dans $\mathbb{Z}_p$ avec p un nombre entier très grand, dont la dynamique varie typiquement sur au moins 512 bits.

Le tuple $(g^{r_i}, r_i. Q, r_i. P, \{r_i. H(j)\}_{j \in \Omega})$ pour i variant de 1 à n est ensuite sauvegardé dans une table L pour son utilisation ultérieure dans la phase de chiffrement.

On décrit à présent la phase de chiffrement de l'invention à l'appui de la figure 2.

Dans une première étape 201, on considère le nœud racine R de l'arbre d'accès et on exécute un sous-programme P1 qui retourne un tuple de la forme $(\ddot{C} = g^s, C = s. Q, C_R = s. P, \{C'_{R,j} = s. H(j)\}_{j \in atts(R)})$, s est une valeur aléatoire appartenant à $\mathbb{Z}_p$.

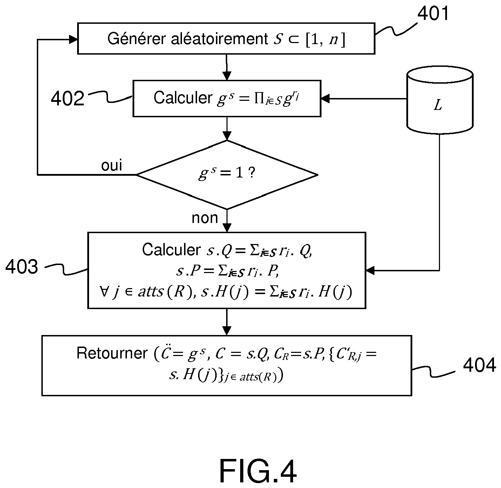

Le sous-programme P1 est représenté sous la forme d'un organigramme à la figure 4 et comprend les étapes suivantes.

Selon une première étape 401 du sous-programme P1, on génère aléatoirement un sous-ensemble S de l'ensemble [1,n] tel que le sous-ensemble S comporte k éléments. n est le premier paramètre de l'invention correspondant au nombre d'entiers $r_i$ générés aléatoirement pendant la phase de préparation et k est un second paramètre de l'invention.

A partir des résultats pré-calculés et sauvegardés dans la mémoire L, une deuxième étape 402 consiste à calculer le terme $\Pi_{i \in S} g^{r_i}$ qui vise à se substituer au terme $g^s$ utilisé normalement dans l'algorithme de base CP-ABE. L'opération effectuée à l'étape 402 correspond à un produit de k éléments pré-calculés et est moins complexe à réaliser que l'opération directe $g^s$ avec s un entier très grand.

Si le résultat du calcul de l'étape 402 est égal à 1, le sous-programme P1 est arrêté et redémarré à la première étape 401. Cette étape de test est nécessaire pour éviter d'obtenir un résultat équivalent à avoir $g^s = 1$, et qui correspondrait à une valeur de s égale à 0.

Dans une troisième étape 403, on calcule les termes suivants :

$\Sigma_{i \in S} r_i.Q$ qui équivaut à $s.Q$ dans l'algorithme CP-ABE de base,
$\Sigma_{i \in S} r_i.P$ qui équivaut à $s.P$ dans l'algorithme CP-ABE de base,
$\forall j \in atts(R)$, $\Sigma_{i \in S} r_i.H(j)$, qui équivaut à $s.H(j)$ dans l'algorithme CP-ABE de base.

Ces opérations correspondent à des sommes de k termes pré-calculés et sont, là aussi, nettement moins complexes à exécuter que l'opération de multiplication de s avec un élément d'un groupe cyclique qui est effectuée dans l'algorithme CP-ABE de base.

Dans une quatrième étape 404, le sous-programme P1 retourne le tuple $(\ddot{C} = g^s, C = s.Q, C_R = s.P, \{C'_{R,j} = s.H(j)\}_{j \in atts(R)})$ à partir des équivalents calculés.

Le sous-programme P1 n'est exécuté qu'une seule fois, pour le nœud racine R, et permet le calcul des deux premiers termes du message chiffré ainsi que l'amorçage du calcul des deux derniers termes du message chiffré.

On revient à présent à la description de l'algorithme de chiffrement selon l'invention décrit à la figure 2.

A partir du message M à chiffrer, on calcule 202, le terme $\tilde{C} = M. \ddot{C}$ qui correspond au premier terme du message chiffré M. $g^s$.

Ensuite, dans une étape 203, on exécute un sous-programme P2 pour le nœud racine R.

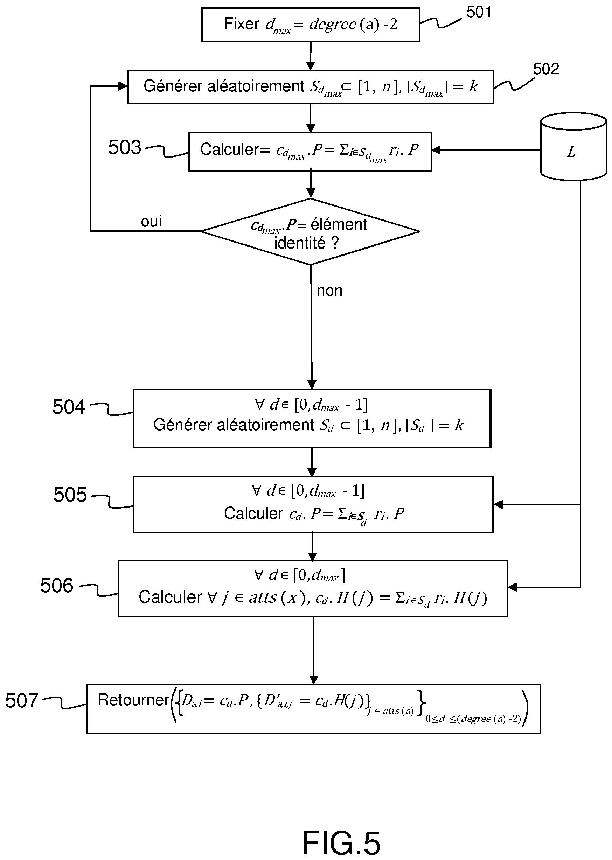

Le sous-programme P2 est représenté sous la forme d'un organigramme à la figure 5. Il est exécuté pour chaque nœud de l'arbre, y compris le nœud racine et comprend les étapes suivantes.

Dans une première étape 501 du sous-programme P2, on fixe tout d'abord un paramètre $d_{max}$ = degree(a) - 2. Autrement dit, ce paramètre $d_{max}$ est égal à la valeur du seuil de la porte associée au nœud a.

Ensuite, on génère aléatoirement 502 un sous-ensemble $S_{dmax}$ de l'ensemble [1,n] tel que le sous-ensemble $S_{dmax}$ comporte k éléments. Le paramètre k peut prendre ici une valeur identique ou différente de la valeur du paramètre k utilisée aux mêmes fins par le sous-programme P1 pour définir le sous-ensemble S.

On calcule 503 ensuite, à partir des résultats sauvegardés dans la mémoire L, le terme $\sum_{i \in S_{dmax}} r_i.P$ qui correspond au terme $c_{dmax}.P$ avec $c_{dmax}$ le coefficient dominant d'un polynôme aléatoire r(x) de degré $d_{max}$, ce polynôme étant associé au nœud a de l'arbre d'accès, selon le principe de l'algorithme CP-ABE décrit précédemment (figure 1).

Si le résultat du calcul précédent est l'élément identité du groupe cyclique $G_1$, le sous-programme P2 est arrêté et redémarré à la deuxième étape 502. Cette étape est importante pour assurer que le coefficient dominant $c_{dmax}$ du polynôme n'est pas nul.

Dans le cas contraire, on exécute les deux étapes suivantes 504,505 pour chaque valeur de d dans l'intervalle [0, $d_{max}$-1] et l'étape 506 pour chaque valeur de d dans l'intervalle [0, $d_{max}$].

Selon l'étape 504, on génère aléatoirement un sous-ensemble $S_d$ de l'ensemble [1,n] tel que le sous-ensemble $S_d$ comporte k éléments. Le paramètre k peut prendre ici une valeur identique ou différente de la valeur du paramètre k utilisée aux mêmes fins par le sous-programme P2 pour définir le sous-ensemble $S_{dmax}$ ou par le sous-programme P1 pour définir le sous-ensemble S.

Ensuite, on calcule 505, à partir des valeurs sauvegardées dans la mémoire L, les termes $\sum_{i \in S_d} r_i.P$ qui sont équivalents aux termes $c_d.P$ dans l'algorithme CP-ABE de base. Les coefficients $c_d$ sont les coefficients du polynôme aléatoire r(x) de degré $d_{max}$ associé au nœud a dans la structure d'accès.

Puis, on calcule 506, toujours à partir des valeurs sauvegardées dans la mémoire L, les termes $\sum_{i \in S_d} r_i. H(j)$ équivalents aux termes $c_d.H(j)$ dans l'algorithme CP-ABE de base.

Enfin, dans une dernière étape 507, le sous-programme P2 retourne le tuple $(\{D_{a,i} = c_d.P, \{D'_{a,i,j} = c_d.H(j)\}_{j \in atts(a)}\}_{0 \leq d \leq (degree(a)-2)})$ pour le nœud courant a de l'arbre d'accès.

Le sous-programme P2 permet de calculer, à partir de simples opérations d'additions des termes pré-calculés pendant la phase de préparation, des produits entre un coefficient d'un polynôme aléatoire (qui n'est pas directement généré) et un élément d'un groupe cyclique (P, H(j)). Au lieu de générer aléatoirement les coefficients des polynômes dans $\mathbb{Z}_p$ et d'effectuer des opérations de multiplication entre ces coefficients et les éléments d'un groupe cyclique, on utilise les résultats de pré-calculs pour accélérer l'opération de chiffrement.

On revient à présent à la description de l'algorithme de la figure 2. Selon l'étape 203, le sous-programme P2 est donc exécuté pour le nœud racine R. A partir des résultats retournés par le sous-programme P2, à savoir les tuples $(\{D_{R,i} = c_d.P, \{D'_{R,i,j} = c_d.H(j)\}_{j \in atts(R)}\}_{0 \leq d \leq (degree(R)-2)})$, l'algorithme est en mesure de définir complètement, sans le calculer, le polynôme aléatoire $q_R()$ associé au nœud R comme étant :

$$q_R(x) = r(x).x + s$$

On introduit ici le polynôme secondaire r(x) lié au polynôme principal $q_R(x)$ par la relation précédente et dont les coefficients sont les coefficients $c_d$ introduits précédemment. On retrouve ici la valeur s = $q_R(0)$ défini à la première étape 101 de l'algorithme CP-ABE non modifié.

En utilisant le tuple retourné à l'étape 203, on calcule ensuite 204, pour tous les indices i variant dans la plage [1, num(R)], les termes :

$$r(i).i.P = i.\sum_{0 \leq d \leq d_{max}} i^d.D_{R,i}.$$

Le calcul effectué à l'étape 204 permet d'obtenir les résultats intermédiaires r(i).i.P qui servent ensuite à déterminer le résultat final recherché:

$$q_R(i).P = r(i).i.P + C_R$$
$$= r(i).i.P + s.P.$$

Ainsi, le terme $q_R(i).P$ est obtenu sans effectuer de multiplication directe entre un nombre aléatoire de $\mathbb{Z}_p$ et un élément (P) d'un groupe cyclique mais en effectuant une simple addition entre les termes $r(i).i.P$ et $C_R$.

De la même façon, à l'étape 205, on calcule pour tous les indices i variant dans la plage [1, num(R)] et pour $\forall$ $j \in atts(b)$ où $b \in child(x)$ et index(b) = i, les résultats intermédiaires :

$$r(i).i.H(j) = i.\sum_{0 \le d \le d_{max}} i^d.D'_{R,i,j}$$

Puis on calcule les résultats finaux :
$\forall i \in [1, num(R)]$, $\forall j \in atts(b)$, où $b \in child(x)$ et $index(b) = i$, la somme :

$$q_R(i).H(j) = r(i).i.H(j) + C'_{R,j}$$
$$= r(i).i.H(j) + s.H(j)$$

Le résultat final est ainsi obtenu en effectuant une simple addition entre le résultat intermédiaire et le terme $C'_{R,j}$ calculé par le sous-programme P1.

Les termes $q_R(i).P$ et $q_R(i).H(j)$ calculés lors des étapes 204,205 correspondent aux produits entre le polynôme aléatoire pris aux points d'indices correspondants aux nœuds enfants et un élément d'un groupe cyclique (P, H(j)).

Ces termes sont utilisés pour calculer récursivement, en parcourant l'arbre d'accès du nœud racine vers les nœuds feuilles, tous les produits entre les points $q_a(i)$ où $q_a()$ est le polynôme aléatoire associé au nœud a, et l'élément P ou H(j).

Ces termes sont calculés à partir des résultats sauvegardés en mémoire L durant la phase de préparation. Les calculs nécessaires pour déterminer ces termes sont ainsi fortement allégés et le temps d'exécution de ces étapes est diminué par rapport à une implémentation classique de l'algorithme CP-ABE de base qui consisterait à calculer directement les produits $q_R(i).P$ et $q_R(i).H(j)$ ce qui impliquerait des multiplications sur des nombres très grands.

Ainsi, l'algorithme se poursuit en fixant 206 le nœud courant a en démarrant par le nœud racine R. Si l'arbre n'est pas totalement traversé, on fixe 207 le nœud courant a à un nouveau nœud puis on exécute 208 à nouveau le sous-programme P2 pour le nœud a.

Si a n'est pas un nœud feuille, on effectue les mêmes étapes de calcul 209,210 permettant d'aboutir aux termes $a_a(i).P$ et $q_a(i).H(j)$.

Pour tout nœud a de l'arbre d'accès, si degree(a) = 1, alors le polynôme $q_a()$ est défini comme étant $q_a(x) = q_{parent(a)}(index(a))$. Si degree(a) > 1, l'algorithme de chiffrement exécute 208 le sous-programme P2 qui retourne le tuple $(\{D_{a,i} = c_d.P, \{D'_{a,i,j} = c_d.H(j)\}_{j \in atts(a)}\}_{0 \le d \le (degree(a)-2)})$.

L'algorithme est en mesure de définir complètement (sans le calculer) le polynôme $q_a()$ comme étant :
$q_a(x) = r(x).x + q_{parent(a)}(index(a))$.

En utilisant le tuple obtenu à l'issue de l'étape 208, l'algorithme calcule 209,210,
$\forall i \in [1, num(a)]$,

$$r(i).i.P = i.\sum_{0 \le d \le d_{max}} i^d.D_{a,i}.$$

Il calcule également, $\forall i \in [1, num(a)]$, $\forall j \in atts(b)$ où $y \in child(a)$ et index(b) = i,

$$r(i).i.H(j) = i.\sum_{0 \le d \le d_{max}} i^d.D'_{a,i,j}.$$

L'algorithme calcule ensuite, $\forall i \in [1, num(a)]$, la somme :

$$q_a(i).P = r(i).i.P + q_{parent(a)}(index(a)).P.$$

Il calcule aussi, $\forall i \in [1, num(a)]$, $\forall j \in atts(b)$, où b est un enfant de a d'indice i, la somme :

$$q_a(i).H(j) = r(i).i.H(j) + q_{parent(a)}(index(a)).H(j).$$

L'algorithme s'arrête lorsque tout l'arbre est traversé et que tous les nœuds ont été parcourus. L'algorithme calcule ainsi récursivement pour tout nœud feuille y, les termes $q_y(0).P$ et $q_y(0).H(att(y))$. Le message chiffré est retourné dans une étape ultime 211, avec Y l'ensemble des nœuds feuilles de l'arbre d'accès :

$$CT = \left(\Gamma, \tilde{C} = M.g^s, C = s.Q, \forall y \in Y : C_y = q_y(0).P, C'_y = q_y(0).H\big(att(y)\big)\right)$$

L'exemple de mise en œuvre de l'invention décrit à la figure 2 ne doit pas être interprété comme limitant l'invention à cette seule implémentation particulière. En effet, toute variante d'implémentation, en particulier dans la structure des étapes de réalisation, peut être envisagée par l'Homme du métier. Par exemple, le sous-programme P1, le sous-programme P2 ou les deux sous-programmes P1 et P2 peuvent être directement implémentés sous la forme d'étapes d'un programme principal et non sous la forme de sous-programmes. L'ordre et l'agencement des étapes décrites peut également être modifié dans la mesure où le résultat de chiffrement CT est obtenu à l'identique.

L'invention s'étend également à toute application du principe de pré-calcul décrit dans la phase de préparation préalable de l'invention, pour des algorithmes dérivés de l'algorithme CP-ABE. Par algorithmes dérivés, on entend ici, des algorithmes basés sur le même principe de structure d'accès arborescente dans lequel des polynômes aléatoires doivent être générés, de façon récursive, pour chaque nœud de la structure et qui impliquent des multiplications entre des points de ces polynômes et des éléments d'un groupe cyclique.

Selon une première variante de réalisation de l'invention, afin d'améliorer les aléas utilisés durant la phase de chiffrement, la phase de préparation de l'invention est modifiée de la façon suivante.

Les étapes de génération aléatoire d'entiers $r_i$ et les étapes de pré-calcul associées, autrement dit toutes les étapes de la phase de préparation décrite à la figure 4, sont dupliquées pour générer une seconde table L' de valeurs pré-calculées à partir d'un second ensemble de n' entiers générés aléatoirement.

Puis, dans la phase de chiffrement, à chaque étape nécessitant la sélection de k valeurs pré-calculées parmi les n valeurs pré-calculées dans la première table L, on ajoute une valeur pré-calculée supplémentaire sélectionnée dans la seconde table L'. Autrement dit, on sélectionne un sous-ensemble S de valeurs pré-calculées dans la première table L et une valeur pré-calculée supplémentaire dans la seconde table L'.

Cette variante présente l'avantage de renforcer la sécurité du chiffrement face à des attaques de tiers.

Selon une autre variante de réalisation de l'invention, la phase de chiffrement de l'invention peut encore être accélérée en pré-calculant davantage d'opérations.

En effet, les opérations de calcul dans le sous-programme P1 proposé dans la présente invention, requièrent seulement des opérations de multiplication modulaire et d'addition de points. Dans le sous-programme P2, les opérations de calcul comporte en plus des opérations de multiplication scalaire dans le groupe des points avec le scalaire étant des indices de petite taille. Pour des arbres d'accès avec des nœuds non-feuille ayant un nombre important d'enfants, l'invention peut être modifiée de sorte que, lors de la phase de préparation, on génère des polynômes aléatoires de degrés divers et on pré-calcule en outre les termes $r(i).i.P$ et $r(i).i.H(j)$. Le sous-programme P2 peut être modifié en conséquence, et ainsi le nombre d'opérations de calcul peut être réduit en contrepartie d'une mémoire de stockage requise plus importante. Cette variante de l'invention est décrite ci-dessous.

Dans cette variante, le sous-programme P2 modifié prend en entrée les valeurs (n,k) et produit en sortie, pour un nœud a dans l'arbre, un tuple sous la forme $(\{r(i).i.P, \{r(i).i.H(j)\}_{j \in atts(i)}\}_{i \in childs(a)})$ où $r()$ est un polynôme aléatoire de degré $(degree(a)- 2) \geq 0$, défini en utilisant le pré-calcul. On fixe également le nombre maximum de nœuds enfants par nœud dans une structure arborescente d'accès à $(d_{max} + 2)$.

La phase de préparation de l'invention est modifiée de la façon suivante.

- $\forall d \in [0, d_{max}]$, générer $n$ polynômes aléatoires $r_{d,1}(), r_{d,2}(), ...,r_{d,n}()$ de degré d, avec des coefficients appartenant à $\mathbb{Z}_p$.
- $\forall d \in [0, d_{max}]$, $\forall l \in [1,n]$, fixer $c_{d,l}$ comme étant le coefficient non-nul du terme de plus haut degré du polynôme $r_{d,l}()$.
- $\forall d \in [0, d_{max}]$, $\forall l \in [1, n]$, $\forall i \in [1, d_{max} + 2]$, calculer $r_{d,l}(i).i.P$.

- $\forall\ d \in [0,\ d_{max}],\ \forall\ l \in [1,n],\ \forall\ i \in [1,\ d_{max}+2],\ \forall\ j \in \Omega$, calculer $r_{d,l}(i).i.H(j)$.

- $\forall\ d \in [0,\ d_{max}],\ \forall\ l \in [1,n]$, sauvegarder le tuple $$\left( c_{d,l},\ \left\{ r_{d,l}(i).i.P, \{ r_{d,l}(i).i.H(j) \}_{j \in \Omega} \right\}_{1\leq i \leq d_{max}+2} \right)$$ dans une table $L_d$.

Ainsi, dans cette phase de préparation modifiée, les polynômes aléatoires sont directement générés ce qui permet de pré-calculer les termes $r_{d,l}(i).i.P$ et $r_{d,l}(i).i.H(j)$.

Le sous-programme P2 est ensuite modifié de la façon suivante.

Les étapes 501 et 502 conservées à l'identique.

Ensuite, en utilisant les valeurs tabulées de la mémoire $L_d$, on calcule $c = \sum_{l \in S} c_{d,l}\ mod\ p$.

Si a = 0, le sous-programme est arrêté et redémarré à l'étape 502.

Sinon, les calculs suivants sont effectués.

$\forall\ i \in [1,\ num(a)]$, calculer $r(i).i.P = \sum_{l \in S} r_{d,l}(i).i.P$.

$\forall\ i \in [1,\ num(a)]$, $\forall\ j \in atts(y)$ où $y \in child(a)$ et index(y) = i, calculer $r(i).i.H(j) = \sum_{l \in S} r_{d,l}(i).i.H(j)$.

Retourner $(\{r(i).i.P, \{r(i).i.H(j)\}\}_{j \in atts(y), y \in child(a), index(y)=i})_{1 \leq i \leq num(a)}$.

L'invention apporte de nombreux avantages, notamment en termes de performances. L'invention permet de réduire le coût en termes de calculs d'un chiffrement de données basé sur le schéma CP-ABE de Bethencourt et autres. L'invention permet aussi de réduire le temps d'exécution du chiffrement des données. L'invention ne nécessite pas le déploiement d'une nouvelle infrastructure dédiée. Le chiffrement des données est achevé sans avoir recours à des tierces parties de confiance pour accélérer le chiffrement. L'invention est réalisée au niveau du chiffreur des données. Elle ne nécessite pas de modification sur l'algorithme de déchiffrement des données. Les données chiffrées peuvent être stockées et accédées par des utilisateurs de données de la même manière que le schéma original.

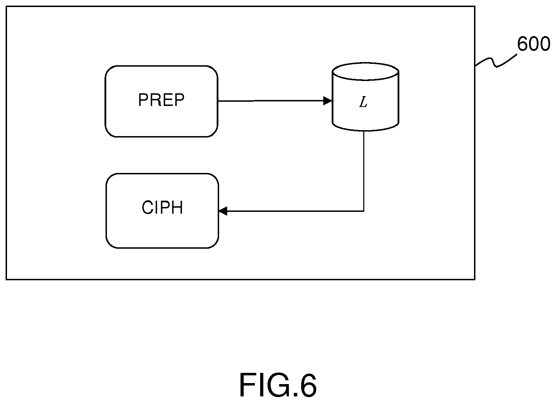

La figure 6 décrit schématiquement un exemple de dispositif de chiffrement 600 selon l'invention. Un tel dispositif 600 comporte une ou plusieurs mémoires L, un premier module ou unité de calcul PREP configuré pour mettre en œuvre la phase de préparation de l'invention afin de réaliser un ensemble de pré-calculs qui sont ensuite transmis vers la ou les mémoires L. Le dispositif 600 comporte également un second module CIPH ou unité de calcul configuré pour mettre en œuvre la phase de chiffrement de l'invention afin de chiffrer un message M à partir des résultats de pré-calculs sauvegardés dans la ou les mémoires L.

Le premier module PREP est avantageusement exécuté pendant une phase durant laquelle le dispositif 600 possède des ressources de calcul supplémentaires. Alternativement, le module PREP est exécuté à l'initialisation du dispositif 600.

Selon une variante de réalisation, le module PREP peut être déporté pour être exécuté par une machine tierce de confiance (non représentée sur la figure 6) qui possède des ressources de calcul plus importantes que le dispositif 600. Dans un tel cas, les résultats de pré-calcul sont transmis depuis la machine tierce vers la ou les mémoires L du dispositif de chiffrement par le biais d'une liaison sécurisée.

La ou les mémoires L peuvent être incluses dans le dispositif de chiffrement 600 mais peuvent également être déportées, par exemple dans un serveur de sauvegarde qui comprend des capacités de sauvegarde plus importantes que le dispositif 600. Dans ce dernier cas, le dispositif 600 comprend des moyens de communication et d'échange de données sécurisés avec le serveur de sauvegarde.

L'exemple d'architecture de la figure 6 est donné à titre illustratif et non limitatif. Tout autre arrangement permettant d'obtenir les mêmes fonctionnalités revendiquées par l'invention entre dans le cadre de l'invention.

La présente invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique.

L'invention peut également être implémentée dans un dispositif de chiffrement qui peut comprendre un ou plusieurs circuits électroniques dédiés ou un circuit à usage général. La technique de l'invention peut se réaliser sur une machine de calcul reprogrammable (un processeur ou un micro contrôleur par exemple) exécutant un programme comprenant une séquence d'instructions, ou sur une machine de calcul dédiée (par exemple un ensemble de portes logiques comme un FPGA ou un ASIC, ou tout autre module matériel). Le dispositif de chiffrement comprend également une ou plusieurs mémoires aux fins de sauvegarder les pré-calculs réalisés pendant la phase de préparation.

Selon un mode de réalisation, l'invention peut comprendre au moins un support de stockage lisible par ordinateur (RAM, ROM, EEPROM, mémoire flash ou une autre technologie de mémoire, CD-ROM, DVD ou un autre support à disque optique, cassette magnétique, bande magnétique, disque de stockage magnétique ou un autre dispositif de stockage, ou un autre support de stockage non transitoire lisible par ordinateur) codé avec un programme d'ordinateur (c'est-à-dire plusieurs instructions exécutables) qui, lorsqu'il est exécuté sur un processeur ou plusieurs processeurs, effectue les fonctions des modes de réalisation décrits précédemment.

A titre d'exemple d'architecture matérielle adaptée à mettre en œuvre l'invention, un dispositif selon l'invention peut comporter un bus de communication auquel sont reliés une unité centrale de traitement ou microprocesseur (CPU, acronyme de « *Central Processing Unit* » en anglais), lequel processeur peut être *"multi-core"* ou *"many-core";* une mémoire morte (ROM, acronyme de « *Read Only Memory* » en anglais) pouvant comporter les programmes nécessaires à la mise en œuvre de l'invention; une mémoire vive ou mémoire cache (RAM, acronyme de « *Random Access Memory* » en anglais) comportant des registres adaptés à enregistrer des variables et paramètres créés et modifiés au cours de l'exécution des programmes précités ; et une interface de communication ou E/S (I/O acronyme de « *Input/ouput* » en anglais) adaptée à transmettre et à recevoir des données.

Dans le cas où l'invention est implantée sur une machine de calcul reprogrammable, le programme correspondant (c'est-à-dire la séquence d'instructions) peut être stocké dans ou sur un médium de stockage amovible (par exemple une carte SD, un DVD ou Bluray, un moyen de stockage de masse tel qu'un disque dur e.g. un SSD) ou non-amovible, volatile ou non-volatile, ce médium de stockage étant lisible partiellement ou totalement par un ordinateur ou un processeur. Le support lisible par ordinateur peut être transportable ou communicable ou mobile ou transmissible (i.e. par un réseau de télécommunication 2G, 3G, 4G, Wifi, BLE, fibre optique ou autre).

L'invention peut également être implémentée en tant que produit programme d'ordinateur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués ("*Cloud computing*"), éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités. Le code exécutable peut également être téléchargeable depuis un serveur distant.

Le programme d'ordinateur peut comprendre un code source, un code objet, un code source intermédiaire ou un code objet partiellement compilé ou toute autre forme d'instructions de code de programme adaptées pour mettre en œuvre l'invention sous la forme d'un programme d'ordinateur.

Un tel programme peut présenter diverses architectures fonctionnelles. Par exemple, un programme d'ordinateur selon l'invention peut être décomposé en une ou plusieurs routines qui peuvent être adaptées à exécuter une ou plusieurs fonctions de l'invention telles que décrites précédemment. Les routines peuvent être enregistrées ensemble dans un même fichier exécutable mais peuvent également être sauvegardées dans un ou plusieurs fichiers externes sous la forme de librairies qui sont associées à un programme principal de façon statique ou dynamique. Les routines peuvent être appelées depuis le programme principal mais peuvent également comprendre des appels à d'autres routines ou sous-routines.

Tous les procédés ou étapes de procédés, programmes ou sous-programmes décrits sous la forme d'organigrammes doivent être interprétés comme correspondant à des modules, segments ou portions de code de programme qui incluent une ou plusieurs instructions de code pour implémenter les fonctions logiques et les étapes de l'invention décrites.

L'invention s'applique au contexte général des réseaux à faibles ressources dans lequel un dispositif contraint en ressources souhaite chiffrer des données en utilisant le chiffrement basé sur les attributs. L'invention permet de réduire le coût de calcul et la consommation énergétique associée, et d'accélérer le chiffrement.

La solution proposée par l'invention rend possible l'utilisation des algorithmes de chiffrement basé sur les attributs (ABE) directement aux niveaux de capteurs ou d'actionneurs contraints en ressources (peu de puissance de calcul et d'énergie), quand aujourd'hui ce type de chiffrement ne peut être mis en place qu'au niveau de plateformes plus riches en ressources (p. ex. des passerelles). Cette solution permet ainsi de renforcer la sécurité des réseaux de capteurs sans fil, avec notamment du chiffrement de bout en bout, tout en permettant plusieurs avantages en termes de simplification et d'accélération de la gestion de la sécurité. Le chiffrement ABE est tout particulièrement intéressant lorsqu'une donnée particulière est susceptible d'être utilisée par plusieurs utilisateurs différents. Avec le schéma CP-ABE de Bethencourt et autres, la politique de contrôle d'accès à la donnée est directement associée à la donnée lors du processus de chiffrement. Ainsi la donnée chiffrée peut être sauvegardée sur tout type de serveur (p. ex. service cloud), sans compromettre la sécurité de la donnée et sans la nécessité de mettre en place sur ce serveur des mécanismes spécifiques de contrôle d'accès. Cette technologie trouve donc des applications naturelles dans les domaines tels que le transport de marchandises, la santé, la ville intelligente, l'usine du futur, cette liste n'étant pas limitative.

Plusieurs applications peuvent bénéficier des avantages apportés par l'invention, voire même émerger grâce à l'invention. Deux exemples pour illustrer les applications de l'invention sont décrits ci-dessous :

Un premier exemple concerne les systèmes de contrôle de conteneurs. Durant le transport et le stockage de marchandises, certains conteneurs ou palettes de conteneurs peuvent être équipés de capteurs. Les capteurs permettent de surveiller l'état du conteneur et transmettre les données mesurées sur la température, l'humidité, le contenu du gaz ou d'autres paramètres, lors du transport des marchandises. Les capteurs peuvent être connectés à Internet en utilisant une passerelle embarquée sur le moyen de transport (p. ex. un véhicule tel un camion), ce qui permet aux capteurs de transmettre les mesures sur le réseau Internet en utilisant des protocoles de communications standards. Les données mesurées peuvent être chiffrées par les capteurs avant leur envoi sur Internet, surtout si les conteneurs adjacents peuvent contenir des marchandises d'autres clients. Lors de l'envoi vers leur destination, les conteneurs peuvent franchir plusieurs arrêts et être transbordées sur d'autres modes de transport (p. ex. aérien, maritime, ferroviaire, routier). Le personnel responsable du transbordement des marchandises, ainsi que les transporteurs et les clients peuvent accéder à certaines données mesurées par les capteurs avec différents niveaux d'autorisation et de durée de validité. Les clients finaux peuvent avoir accès aux logs qui donnent des informations sur plusieurs paramètres mesurés durant toute la chaine de transport. La surveillance à distance des conteneurs permet de réduire les pertes de produits, en particulier en ce qui concerne les denrées périssables. Si un problème survient qui peut mener à une perte de qualité, ou une infestation de germes, les vendeurs des produits peuvent prendre la décision de changer la destination de certaines marchandises pour qu'elles soient utilisées rapidement, ou détruire certains produits avant qu'ils arrivent à leur destination. Dans ce contexte, l'invention peut être installée au niveau des capteurs pour permettre de protéger les données des capteurs en confidentialité, et permettre un contrôle d'accès aux données de différents niveaux. La politique de sécurité associée aux données des capteurs peut être mise à jour à distance par les vendeurs. Ces derniers peuvent ainsi sélectionner le niveau de sécurité pour des nouveaux clients, transbordeurs, ou transporteurs.

Un deuxième exemple d'application possible de l'invention concerne la télésurveillance des patients dans le domaine médical. La télésurveillance des patients est un moyen de surveillance à distance de l'état de santé des malades, dans un établissement hospitalier, qui permet d'améliorer la qualité des soins et de réduire les coûts de prestation de soins de santé. La plupart des technologies de télésurveillance utilisent des capteurs pour mesurer les paramètres physiologiques, p. ex. la température, la tension artérielle (ou le pouls), ou d'autres paramètres. Les capteurs généralement fonctionnent par batterie, et ils sont portés par les patients. Ils peuvent communiquer en utilisant des technologies sans-fil, et être connectés à Internet en utilisant les boitiers d'accès à Internet des patients. Les données mesurées sont stockées localement au domicile du patient, ou transmises à des serveurs centralisés sur le réseau Internet ou un réseau privé qui permettent aux patients et aux fournisseurs de soins de santé d'accéder aux données à distance. Les données médicales étant toujours considérées très sensibles, il est très important de protéger les données au moyen d'algorithmes de chiffrement. Les données mesurées peuvent être reportées au patient lui-même, sa famille, ses amis, ou au personnel médical en charge du patient. Le patient peut aussi, d'une manière sélective, permettre à des personnes ou des groupes d'accéder aux données. L'invention peut être utilisée dans ce contexte pour permettre aux capteurs de chiffrer les données en utilisant des méthodes de chiffrement basé sur les attributs, et permettre aussi au patient de définir une politique de sécurité fine pour protéger ses données personnelles.

Les exemples d'application de l'invention décrits ci-dessus sont donnés à titre illustratif afin de démontrer la portée large des applications industrielles possibles pour l'invention ainsi que la possibilité de mettre en œuvre la méthode selon l'invention dans de nombreux types de capteurs pouvant intégrer un dispositif de chiffrement de données.

### Références

[1] J. Bethencourt, A. Sahai, and B. Waters. Ciphertext-Policy Attribute-Based Encryption. In Proceedings of the 2007 IEEE Symposium on Security and Privacy (SP '07). 2007.

[2] L. Touati, Y. Challal, et A. Bouabdallah, "C-CP-ABE: Coopérative Ciphertext Policy Attribute-Based Encryption for the Internet of Things", Advanced Networking Distributed Systems and Applications (INDS), 2014

[3] Ateniese et autres, « Low cost Standard Signature in Wireless Sensor Network: A Case for Reviving Pre-computation Techniques? », NDSS, 2013

[4] Boyko et autres, « Speeding up discrète log and factoring based schemes via precomputations », EUROCRYPT '98, 1998

[5] J.-S. Coron, D. M'Rahi, et C. Tymen, « Fast Generation of Pairs (k, [k]P) for Koblitz Elliptic Curves », The 8th Annual International Workshop on Selected Areas in Cryptography (SAC '01), 2001.

[6] G. Bianchi, A. T. Capossele, C. Petrioli, et D. Spenza, "AGREE: exploiting energy harvesting to support data-centric access control in WSNs", Ad Hoc Netw. 11, 8 (November 2013), 2625-2636.

[7] S. Jahid, N. Borisov, "PIRATTE: Proxy-based immediate revocation of ATTribute-based encryption", University of Illinois at Urbana-Champaign

[8] Yi-Mu Ji, J. Tan, H. Liu, Y. Sun, J. Kang, Z. Kuang, C. Zhao, "A privacy protection method based on CP-ABE and KP-ABE for cloud computing", journal of software, vol 9, n°6, june 2014,

[9] L. Touati, Y. Challal, "Batch-based CP-ABE with attribute revocation mechanism for the Internet of things", International Conférence on Computing, Networking and Communications (ICNC 2015), Feb 2015, Anaheim, France, pp 1044-1049.

[10] S. Roy, M. Chuah, "Secure Data Retrieval Based on Ciphertext policy attribute-based encryption (CP-ABE) system for the DTNs".

**Revendications**

1.  Méthode, implémentée par ordinateur, de chiffrement d'un message M basée sur les attributs comprenant l'exécution d'un algorithme de chiffrement du type CP-ABE ou dérivé de CP-ABE, associé à une politique d'accès au message M chiffré décrite par une structure d'accès organisée sous la forme d'un arbre, le chiffrement du message M par ledit algorithme nécessitant, pour chaque nœud non-feuille a de l'arbre, la génération aléatoire d'un polynôme principal $q_a(x)$ et au moins un calcul de produit entre le polynôme principal $q_a(x)$ pris en au moins un point $q_a(i)$ et au moins un élément d'un groupe cyclique Q, P ou H(j), ladite méthode étant **caractérisée en ce qu'**elle comprend :

    - dans une étape préalable au chiffrement du message M, le pré-calcul (302) du produit entre une pluralité d'entiers $r_i$ générés aléatoirement (301) et au moins un élément d'un groupe cyclique Q, P ou H(j) et la sauvegarde des résultats de pré-calcul dans une mémoire L,
    - pour chiffrer le message M, l'accès aux résultats de pré-calcul sauvegardés dans la mémoire L et leur utilisation pour effectuer ledit au moins un calcul (204,205,209,210,403) de produit entre le polynôme principal pris en au moins un point $q_a(i)$ et au moins un élément d'un groupe cyclique Q, P ou H(j).

2.  Méthode de chiffrement selon la revendication 1 comprenant, dans l'étape préalable, la génération aléatoire (301) d'un premier nombre n d'entiers $r_i$ et le pré-calcul (302) des produits entre chaque nombre entier $r_i$ et au moins un élément d'un groupe cyclique Q, P, ou H(j) et, pour chiffrer le message M, l'utilisation d'un second nombre k, inférieur à n, de résultats de pré-calcul, choisis aléatoirement, pour effectuer au moins un calcul de produit (204,205,209,210,403) entre le polynôme principal $q_a(x)$ pris en au moins un point $q_a(i)$ et au moins un élément d'un groupe cyclique Q, P ou H(j).

3.  Méthode de chiffrement selon la revendication 2 comprenant, pour chiffrer le message M, pour le nœud racine R de l'arbre, le calcul (403) de la somme de résultats de pré-calcul pour déterminer le produit entre une valeur entière s aléatoire et ledit au moins un élément d'un groupe cyclique Q, P ou H(j).

4.  Méthode de chiffrement selon l'une des revendications 2 ou 3 comprenant, pour chiffrer le message M, pour chaque nœud non feuille, pour chaque coefficient $c_d$ d'un polynôme secondaire r(x) relié au polynôme principal par une relation de dépendance du type $q_a(x) = r(x).x + q_a(0)$, le calcul (503,505,506) de la somme de résultats de pré-calcul pour déterminer un résultat intermédiaire égal au produit entre ledit coefficient $c_d$ et ledit au moins un élément d'un groupe cyclique P ou H(j).

5.  Méthode de chiffrement selon la revendication 4 comprenant, pour chiffrer le message M, pour chaque nœud non feuille, pour chaque nœud enfant dudit nœud non feuille indexé par un indice i, une évaluation intermédiaire du produit entre d'une part le produit r(i).i et d'autre part ledit au moins un élément d'un groupe cyclique P ou H(j) à partir d'une somme pondérée desdits résultats intermédiaires calculée sur l'ensemble des coefficients $c_d$ du polynôme secondaire r(x).

6.  Méthode de chiffrement selon la revendication 5 comprenant, pour chiffrer le message M, pour chaque nœud non feuille, pour chaque nœud enfant dudit nœud non feuille, l'évaluation du produit entre le polynôme principal $q_a(x)$ pris en au moins un point $q_a(i)$ variant sur les indices des nœuds enfants du nœud non feuille et ledit au moins un élément d'un groupe cyclique P ou H(j) à partir de l'évaluation intermédiaire et de l'évaluation antérieure du produit entre le polynôme principal $q_{parent}(x)$ associé au nœud parent dudit nœud non feuille pris au point index(a) correspondant à l'indice dudit nœud non feuille au sein des enfants dudit nœud parent, et ledit au moins un élément d'un groupe cyclique P ou H(j).

7. Méthode de chiffrement selon la revendication 6 dans laquelle l'évaluation du produit entre le polynôme principal $q_a(x)$ pris en au moins un point $q_a(i)$ variant sur les indices des nœuds enfants du nœud non feuille et ledit au moins un élément d'un groupe cyclique P ou H(j) est effectuée de façon récursive en parcourant l'arbre de son nœud racine vers ses nœuds feuilles.

8. Méthode de chiffrement selon l'une des revendications 2 à 7 comprenant, dans l'étape préalable, la génération d'un troisième nombre n' d'entiers $r'_i$ et le pré-calcul de n' produits et, pour chiffrer le message M, l'utilisation, en outre, d'un résultat de pré-calcul supplémentaire parmi les n' produits.

9. Méthode de chiffrement selon la revendication 1 dans laquelle, les entiers générés aléatoirement correspondent aux valeurs $q_a(i)$ dudit polynôme principal pris en une pluralité de points i et le pré-calcul réalisé dans l'étape préalable inclut le produit entre d'une part le produit $q_a(i).i$ et d'autre part au moins un élément d'un groupe cyclique Q, P ou H(j).

10. Méthode de chiffrement selon la revendication 9 comprenant, pour chiffrer le message M, pour chaque nœud non feuille, pour chaque nœud enfant dudit nœud non feuille, l'évaluation du produit entre le polynôme principal $q_a(x)$ pris en au moins un point $q_a(i)$ variant sur les indices des nœuds enfants du nœud non feuille et ledit au moins un élément d'un groupe cyclique Q, P ou H(j) à partir de la somme d'au moins une partie des résultats de pré-calcul.

11. Méthode de chiffrement selon l'une des revendications précédentes dans laquelle ledit au moins un élément d'un groupe cyclique est choisi parmi un point P d'une courbe elliptique, le produit Q d'un point P d'une courbe elliptique avec un entier le résultat H(j) de l'application d'une fonction de hachage à une valeur j représentant un attribut associé à un nœud feuille de l'arbre.

12. Dispositif de chiffrement comprenant des moyens (PREP,CIPH), incluant un processeur, configurés pour exécuter la méthode de chiffrement selon l'une quelconque des revendications 1 à 11 et au moins une mémoire L dans laquelle sont stockés les résultats de pré-calcul de l'étape préalable de ladite méthode.

13. Produit programme d'ordinateur téléchargeable depuis un réseau de communication et/ou stocké sur un support lisible par ordinateur comportant des instructions de code de programme pour l'exécution de la méthode de chiffrement selon l'une quelconque des revendications 1 à 11, lorsque le programme est exécuté par un processeur.

14. Support d'enregistrement lisible par un processeur sur lequel est enregistré un programme comportant des instructions de code de programme pour l'exécution de la méthode de chiffrement selon l'une quelconque des revendications 1 à 11, lorsque le programme est exécuté par un processeur.

## Patentansprüche

1. Computerimplementiertes Verfahren zum attributbasierten Verschlüsseln einer Nachricht M, die das Ausführen eines Verschlüsselungsalgorithmus des CP-ABE-Typs oder von CP-ABE abgeleitet beinhaltet, assoziiert mit einer Richtlinie für das Zugreifen auf die verschlüsselte Nachricht M, beschrieben durch eine in Baumform organisierte Zugangsstruktur, wobei die Verschlüsselung der Nachricht M durch den Algorithmus für jeden Nicht-Blattknoten (a) des Baums das zufällige Erzeugen eines Hauptpolynoms $q_a(x)$ und mindestens eine Produktberechnung zwischen dem Hauptpolynom $q_a(x)$, genommen an mindestens einem Punkt $q_a(i)$, und mindestens einem Element einer zyklischen Gruppe Q, P oder H(j) verlangt, wobei das Verfahren **dadurch gekennzeichnet ist, dass** es Folgendes beinhaltet:

   - Vorberechnen (302), in einem Schritt vor dem Verschlüsseln der Nachricht M, des Produkts zwischen einer Vielzahl von zufällig erzeugten (301) ganzen Zahlen $r_i$ und mindestens einem Element einer zyklischen Gruppe Q, P oder H(j), und Speichern der Vorberechnungsergebnisse in einem Speicher L;
   - Zugreifen, zum Verschlüsseln der Nachricht M, auf die im Speicher L gespeicherten Vorberechnungsergebnisse und Nutzen derselben zum Durchführen der mindestens einen Produktberechnung (204, 205, 209, 210, 403) zwischen dem an mindestens einem Punkt $q_a(i)$ genommenen Hauptpolynom und mindestens einem Element einer zyklischen Gruppe Q, P oder H(j).

2. Verschlüsselungsverfahren nach Anspruch 1, das im vorherigen Schritt das zufällige Erzeugen (301) einer ersten Anzahl n von ganzen Zahlen $r_i$ und das Vorberechnen (302) von Produkten zwischen jeder ganzen Zahl $r_i$ und mindestens einem Element einer zyklischen Gruppe Q, P oder H(j) und, zum Verschlüsseln der Nachricht M, das Benutzen einer zweiten Zahl k, die kleiner ist als n, von zufällig gewählten Vorberechnungsergebnissen beinhaltet, um mindestens eine Produktberechnung (204, 205, 209, 210, 403) zwischen dem an mindestens einem Punkt $q_a(i)$ genommenen Hauptpolynom $q_a(x)$ und mindestens einem Element einer zyklischen Gruppe Q, P oder H(j) durchzuführen.

3. Verschlüsselungsverfahren nach Anspruch 2, das zum Verschlüsseln der Nachricht M für den Wurzelknoten R des Baums das Berechnen (403) der Summe der Vorberechnungsergebnisse beinhaltet, um das Produkt zwischen einem zufälligen ganzzahligen Wert s und dem mindestens einen Element einer zyklischen Gruppe Q, P oder H(j) zu bestimmen.

4. Verschlüsselungsverfahren nach Anspruch 2 oder 3, das zum Verschlüsseln der Nachricht M für jeden Nicht-Blattknoten, für jeden Koeffizienten $c_d$ eines sekundären Polynoms r(x), das durch eine Abhängigkeitsbeziehung des Typs $q_a(x) = r(x).x + q_a(o)$ mit dem Hauptpolynom verbunden ist, das Berechen (503, 505, 506) der Summe der Vorberechnungsergebnisse zum Bestimmen eines Zwischenergebnisses von gleich dem Produkt zwischen dem Koeffizienten $c_d$ und dem mindestens einen Element einer zyklischen Gruppe P oder H(j) beinhaltet.

5. Verschlüsselungsverfahren nach Anspruch 4, das zum Verschlüsseln der Nachricht M, für jeden Nicht-Blattknoten, für jeden Kindknoten des durch einen Index i indexierten Nicht-Blattknotens, eine Zwischenbeurteilung des Produkts zwischen dem Produkt r(i).i einerseits und dem mindestens einen Element einer zyklischen Gruppe P oder H(j) andererseits auf der Basis einer gewichteten Summe der Zwischenergebnisse beinhaltet, die an allen Koeffizienten $c_d$ des sekundären Polynoms r(x) berechnet wurde.

6. Verschlüsselungsverfahren nach Anspruch 5, das zum Verschlüsseln der Nachricht M, für jeden Nicht-Blattknoten, für jeden Kindknoten des Nicht-Blattknotens, das Beurteilen des Produkts zwischen dem an mindestens einem Punkt $q_a(i)$ genommenen Hauptpolynom $q_a(x)$, variierend an den Indexen der Kindknoten des Nicht-Blattknotens, und dem mindestens einen Element einer zyklischen Gruppe P oder H(j), auf der Basis der Zwischenbeurteilung und der vorherigen Beurteilung des Produkts zwischen dem mit dem Elternknoten des an dem Indexpunkt (a) genommenen Nicht-Blattknotens entsprechend dem Index des Nicht-Blattknotens innerhalb der Kinder des Elternknotens verbundenen Hauptpolynom $q_{parent}(x)$ und dem mindestens einen Element einer zyklischen Gruppe P oder H(j) beinhaltet.

7. Verschlüsselungsverfahren nach Anspruch 6, wobei die Beurteilung des Produkts zwischen dem an mindestens einem Punkt $q_a(i)$ genommenen Hauptpolynom $q_a(x)$, variierend an den Indexen der Kindknoten des Nicht-Blattknotens, und dem mindestens einen Element einer zyklischen Gruppe P oder H(j) durch Durchlaufen des Baums von seinem Wurzelknoten zu seinen Blattknoten rekursiv durchgeführt wird.

8. Verschlüsselungsverfahren nach einem der Ansprüche 2 bis 7, das im vorherigen Schritt das Erzeugen einer dritten Anzahl n' von ganzen Zahlen $r'_i$ und das Vorberechnen von n' Produkten und, zum Verschlüsseln der Nachricht M, ferner das Benutzen eines zusätzlichen Vorberechnungsergebnisses aus den n' Produkten beinhaltet.

9. Verschlüsselungsverfahren nach Anspruch 1, wobei die zufällig erzeugten ganzen Zahlen den Werten $q_a(i)$ des an einer Vielzahl von Punkten i genommenen Hauptpolynoms entsprechen und die im voherigen Schritt durchgeführte Vorberechnung das Produkt zwischen dem Produkt $q_a(i).i$ einerseits und mindestens einem Element einer zyklischen Gruppe Q, P oder H(j) andererseits beinhaltet.

10. Verschlüsselungsverfahren nach Anspruch 9, das zum Verschlüsseln der Nachricht M, für jeden Nicht-Blattknoten, für jeden Kindknoten des Nicht-Blattknotens, das Beurteilen des Produkts zwischen dem an mindestens einem Punkt $q_a(i)$ genommenen Hauptpolynom $q_a(x)$, variierend an den Indexen der Kindknoten des Nicht-Blattknotens, und dem mindestens einen Element der zyklischen Gruppe Q, P oder H(j) auf der Basis der Summe von mindestens einigen der Vorberechnungsergebnisse beinhaltet.

11. Verschlüsselungsverfahren nach einem der vorherigen Ansprüche, wobei das mindestens eine Element einer zyklischen Gruppe ausgewählt wird aus einem Punkt P einer elliptischen Kurve, dem Produkt Q eines Punkts P einer elliptischen Kurve mit einer ganzen Zahl β, wobei das Ergebnis H(j) der Anwendung einer Hash-Funktion auf einen Wert j ein mit einem Blattknoten des Baums assoziiertes Attribut repräsentiert.

12. Verschlüsselungsgerät, das Mittel (PREP, CIPH) umfasst, die einen Prozessor, konfiguriert zum Ausführen des Verschlüsselungsverfahrens nach einem der Ansprüche 1 bis 11, und mindestens einen Speicher L beinhalten, in dem die Vorberechnungsergebnisse des vorherigen Schritts des Verfahrens gespeichert werden.

13. Computerprogrammprodukt, das von einem Kommunikationsnetzwerk heruntergeladen und/oder auf einem computerlesbaren Medium gespeichert werden kann, umfassend Programmcode-Befehle zum Ausführen des Verschlüsselungsverfahrens nach einem der Ansprüche 1 bis 11, wenn das Programm von einem Prozessor ausgeführt wird.

14. Prozessorlesbares Aufzeichnungsmedium, auf dem ein Programm aufgezeichnet wird, das Programmcode-Befehle zum Ausführen des Verschlüsselungsverfahrens nach einem der Ansprüche 1 bis 11 umfasst, wenn das Programm von einem Prozessor ausgeführt wird.

**Claims**

1. A computer implemented method for attribute-based encryption of a message M, comprising executing an encryption algorithm of the CP-ABE type, or derived from CP-ABE, associated with a policy for accessing the encrypted message M described by an access structure organised in the form of a tree, the encryption of the message M by said algorithm requiring, for each non-leaf node (a) of the tree, the random generation of a main polynomial $q_a(x)$ and at least one product computation between the main polynomial $q_a(x)$ taken at at least one point $q_a(i)$ and at least one element of a cyclic group Q, P or H(j), said method being **characterised in that** it comprises:

   - pre-computing (302), in a step preceding the encryption of the message M, the product between a plurality of integers $r_i$ that are randomly generated (301) and at least one element of a cyclic group Q, P or H(j), and saving the pre-computation results in a memory L;
   - accessing, in order to encrypt the message M, the pre-computation results saved in the memory L and using them to carry out said at least one product computation (204, 205, 209, 210, 403) between the main polynomial taken at at least one point $q_a(i)$ and at least one element of a cyclic group Q, P or H(j).

2. The encryption method as claimed in claim 1, comprising, in the preceding step, randomly generating (301) a first number n of integers $r_i$ and pre-computing (302) products between each integer number $r_i$ and at least one element of a cyclic group Q, P or H(j), and, for encrypting the message M, using a second number k, lower than n, of randomly selected pre-computation results in order to carry out at least one product computation (204, 205, 209, 210, 403) between the main polynomial $q_a(x)$ taken at at least one point $q_a(i)$ and at least one element of a cyclic group Q, P or H(j).

3. The encryption method as claimed in claim 2, comprising, for encrypting the message M, for the root node R of the tree, computing (403) the sum of the pre-computation results in order to determine the product between a random integer value s and said at least one element of a cyclic group Q, P or H(j).

4. The encryption method as claimed in any one of claims 2 and 3, comprising, for encrypting the message M, for each non-leaf node, for each coefficient $c_d$ of a secondary polynomial r(x) connected to the main polynomial by a dependency relation of the $q_a(x) = r(x).x + q_a(o)$ type, computing (503, 505, 506) the sum of the pre-computation results for determining an intermediate result equal to the product between said coefficient $c_d$ and said at least one element of a cyclic group P or H(j).

5. The encryption method as claimed in claim 4, comprising, for encrypting the message M, for each non-leaf node, for each child node of said non-leaf node indexed by an index i, an intermediate evaluation of the product between, on the one hand, the product r(i).i and, on the other hand, said at least one element of a cyclic group P or H(j) on the basis of a weighted sum of said intermediate results computed on all the coefficients $c_d$ of the secondary polynomial r(x).

6. The encryption method as claimed in claim 5, comprising, for encrypting the message M, for each non-leaf node, for each child node of said non-leaf node, evaluating the product between the main polynomial $q_a(x)$ taken at least one point $q_a(i)$, varying on the indices of the child nodes of the non-leaf node, and said at least one element of a cyclic group P or H(j), on the basis of the intermediate evaluation and of the preceding evaluation of the product between the main polynomial $q_{parent}(x)$ associated with the parent node of said non-leaf node taken at the index point (a) corresponding to the index of said non-leaf node within the children of said parent node, and said at least one element of a cyclic group P or H(j).

7. The encryption method as claimed in claim 6, wherein the evaluation of the product between the main polynomial $q_a(x)$ taken at at least one point $q_a(i)$, varying on the indices of the child nodes of the non-leaf node, and said at least one element of a cyclic group P or H(j) is recursively carried out by traversing the tree from its root node to its leaf nodes.

8. The encryption method as claimed in any one of claims 2 to 7, comprising, in the preceding step, generating a third number n' of integers $r'_i$ and pre-computing n' products and, for encrypting the message M, also using an additional pre-computation result from among the n' products.

9. The encryption method as claimed in claim 1, wherein the randomly generated integers correspond to the values $q_a(i)$ of said main polynomial taken at a plurality of points i, and the pre-computation carried out in the preceding step includes the product between, on the one hand, the product $q_a(i).i$ and, on the other hand, at least one element of a cyclic group Q, P or H(j).

10. The encryption method as claimed in claim 9, comprising, for encrypting the message M, for each non-leaf node, for each child node of said non-leaf node, evaluating the product between the main polynomial $q_a(x)$ taken at at least one point $q_a(i)$, varying on the indices of the child nodes of the non-leaf node, and said at least one element of a cyclic group Q, P or H(j) on the basis of the sum of at least some of the pre-computation results.

11. The encryption method as claimed in any one of the preceding claims, wherein said at least one element of a cyclic group is selected from a point P of an elliptic curve, the product Q of a point P of an elliptic curve with an integer $\beta$, with the result H(j) of the application of a hash function to a value j representing an attribute associated with a leaf node of the tree.

12. An encryption device comprising means (PREP, CIPH), including a processor, configured to execute the encryption method as claimed in any one of claims 1 to 11 and at least one memory L, in which the pre-computation results of the preceding step of said method are stored.

13. A computer program product that can be downloaded from a communication network and/or stored on a computer-readable medium comprising program code instructions for executing the encryption method as claimed in any one of claims 1 to 11, when the program is executed by a processor.

14. A processor-readable recording medium, on which a program is recorded comprising program code instructions for executing the encryption method as claimed in any one of claims 1 to 11, when the program is executed by a processor.

Fixer $s = q_R(0)$ ⟶ 101

Calculer
$\tilde{C} = M.g^s, C = s.Q$ ⟶ 102

Générer les autres points
aléatoires de $q_R()$ degré
$k_R - 1$ ⟶ 103

Fixer $a = R$ ⟶ 104

108 ⟶ Calculer $C_a = q_a(0). P, C'_a = q_a(0). H(att(a))$

oui

$a$ est un nœud
feuille ? — non

107 ⟶ Générer les autres points
aléatoires de $q_a()$ de degré
$k_a - 1$

106 ⟶ Fixer
$q_a(0) = q_{parent(a)}(index(a))$

105 ⟶ Traverser l'arbre vers
un nouveau nœud $a$

non — Tout l'arbre
est traversé ?

oui

109 ⟶ Retourner $(\Gamma, \tilde{C} = M.g^s, C = s.Q, \forall y \in Y:$
$C_y = q_y(0). P, C'_y = q_y(0). H(att(y)))$

## FIG.1

201 — Exécuter **P1** qui retourne $(\ddot{C} = g^s,\ C = s.Q,\ C_R = s.P,\ \{C'_{R,j} = s.\ H(j)\}_{j \in atts(R)})$

202 — Calculer $\tilde{C} = M.\ddot{C}$

203 — Exécuter **P2** pour le nœud $R$

204 — $\forall\ i \in [1, num\ (R)],$ calculer $r(i).i.\ P = i.\Sigma_{0 \leq d_{max}} i^d.D_{R,i}$
et
$q_R(i).P = r(i).i.P + C_R$

205 — $\forall\ i \in [1, num\ (R)], \forall\ j \in atts(b).\ b$ enfant de $R$ d'indice $i$, calculer
$r(i).i.\ H(j) = i.\Sigma_{0 \leq d_{max}} i^d.D'_{R,i,j}$ et $q_R(i).H(j) = r(i).i.\ H(j) + C'_R$

Fixer $a = R$ — 206

210 — $\forall\ i \in [1, num\ (a)], \forall\ j \in atts(b), b$ enfant de $a$
d'indice $i$, calculer $r(i).i.\ H(j) = i.\Sigma_{0 \leq d_{max}} i^d.D'_{a,i,j}$
et $q_a(i).H(j) = r(i).i.\ H(j) +$
$q_{parent(a)}(index(a)).H(j)$

$\forall\ i \in [1, num\ (a)],$ calculer $r(i).i.\ P = i.\Sigma_{0 \leq d \leq d_{max}} i^d.D_{a,i}$
et $q_a(i).P = r(i).i.\ P + q_{parent(a)}(index(a)).P$

209 —

non

$a$ est un nœud feuille ? — oui

208 — Exécuter **P2** pour le nœud $a$

207 — Traverser l'arbre vers un nouveau nœud $a$

non — Tout l'arbre est traversé ?

oui

211 — Retourner $(\Gamma, \tilde{C} = M.g^s, C = s.Q, \forall\ y \in Y:$
$C_y = q_y(0).P, C'_y = q_y(0).\ H(att(y)))$

## FIG.2

Générer n entiers $r_1, r_2, \ldots, r_n \in \mathbb{Z}_p$ — 301

$\forall\, i \in [1,n]$, calculer $g^{r_i}$.
$\forall\, i \in [1,n]$, calculer $r_i.\,Q$.
$\forall\, i \in [1,n]$, calculer $r_i.\,P$.
$\forall\, i \in [1,n]$, $\forall\, j \in \Omega$, calculer $r_i.\,H(j)$. — 302

$(g^{r_i}, r_i.\,Q, P, \{r_i.\,H(j)\}_{j\in\Omega})$

$L$

FIG.3

Génerer aléatoirement $S \subset [1, n]$ — 401

Calculer $g^s = \Pi_{i \in S} g^{r_i}$ — 402

$L$

$g^s = 1$ ?

oui

non

Calculer $s.Q = \Sigma_{i \in S} r_i. Q,$
$s.P = \Sigma_{i \in S} r_i. P,$
$\forall j \in atts(R), s.H(j) = \Sigma_{i \in S} r_i. H(j)$ — 403

Retourner $(\ddot{C} = g^s, C = s.Q, C_R = s.P, \{C'_{R,j} = s.H(j)\}_{j \in atts(R)})$ — 404

FIG.4

Fixer $d_{max} = degree$ (a) -2 — 501

Générer aléatoirement $S_{d_{max}} \subset [1, n]$, $|S_{d_{max}}| = k$ — 502

503 — Calculer= $c_{d_{max}}.P = \Sigma_{i \in S_{d_{max}}} r_i . P$ ← $L$

$c_{d_{max}}.P =$ élément identité ?  oui / non

504 — $\forall d \in [0, d_{max} - 1]$
Générer aléatoirement $S_d \subset [1, n]$, $|S_d| = k$

505 — $\forall d \in [0, d_{max} - 1]$
Calculer $c_d . P = \Sigma_{i \in S_d} r_i . P$

506 — $\forall d \in [0, d_{max}]$
Calculer $\forall j \in atts(x)$, $c_d . H(j) = \Sigma_{i \in S_d} r_i . H(j)$

507 — Retourner$\left( \left\{ D_{a,i} = c_d.P, \left\{ D'_{a,i,j} = c_d.H(j) \right\}_{j \in atts(a)} \right\}_{0 \leq d \leq (degree(a) -2)} \right)$

# FIG.5

FIG.6

# EP 3 371 929 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2832034 A1

- FR 1556679

**Littérature non-brevet citée dans la description**

- **S.YU et al.** Data Sharing on untrusted storage with attribute-based encryption. *A dissertation submitted to the faculty of the Worcester polytechnic institute,* 01 Juillet 2010
- Secure, efficient and fine-grained data access control mechanism for P2P storage cloud. **HE HENG et al.** IEEE transactions on cloud computing. IEEE computer society, 01 Octobre 2014
- Attribute-based encryption for access control using elementary operations. **CRAMPTON JASON et al.** IEEE 27th computer security foundations symposium. IEEE, 19 Juillet 2014
- **RAFAIL OSTROVSKY et al.** Attribute-based encryption with non-monotonic access structures. *International Association for cryptologic research,* 16 Août 2007
- **J. BETHENCOURT ; A. SAHAI ; B. WATERS.** Ciphertext-Policy Attribute-Based Encryption. *In Proceedings of the 2007 IEEE Symposium on Security and Privacy (SP '07),* 2007
- **L. TOUATI ; Y. CHALLAL ; A. BOUABDALLAH.** C-CP-ABE: Coopérative Ciphertext Policy Attribute-Based Encryption for the Internet of Things. *Advanced Networking Distributed Systems and Applications (INDS),* 2014
- **ATENIESE.** Low cost Standard Signature in Wireless Sensor Network: A Case for Reviving Pre-computation Techniques?. *NDSS,* 2013

- **BOYKO.** Speeding up discrète log and factoring based schemes via precomputations. *EUROCRYPT '98,* 1998
- **J.-S. CORON ; D. M'RAHI ; C. TYMEN.** Fast Generation of Pairs (k, [k]P) for Koblitz Elliptic Curves. *The 8th Annual International Workshop on Selected Areas in Cryptography (SAC '01),* 2001
- **G. BIANCHI ; A. T. CAPOSSELE ; C. PETRIOLI ; D. SPENZA.** AGREE: exploiting energy harvesting to support data-centric access control in WSNs. *Ad Hoc Netw,* Novembre 2013, vol. 11 (8), 2625-2636
- **S. JAHID ; N. BORISOV.** PIRATTE: Proxy-based immediate revocation of ATTribute-based encryption. *University of Illinois at Urbana-Champaign*
- **YI-MU JI ; J. TAN ; H. LIU ; Y. SUN ; J. KANG ; Z. KUANG ; C. ZHAO.** A privacy protection method based on CP-ABE and KP-ABE for cloud computing. *journal of software,* Juin 2014, vol. 9 (6
- **L. TOUATI ; Y. CHALLAL.** Batch-based CP-ABE with attribute revocation mechanism for the Internet of things. *International Conférence on Computing, Networking and Communications (ICNC 2015),* Février 2015, 1044-1049
- **S. ROY ; M. CHUAH.** *Secure Data Retrieval Based on Ciphertext policy attribute-based encryption (CP-ABE) system for the DTNs*